# EUROPEAN PATENT SPECIFICATION

(11) **EP 3 987 473 B1**
(45) Date of publication and mention of the grant of the patent: **18.06.2025**
(21) Application number: 20832905.2
(22) Date of filing: 28.06.2020
(51) Int. Cl.: G06Q 30/02, G06T 19/00, G06F 3/0481, A63F 13/61, A63F 13/537, A63F 13/35

(54) **USER SPECIFIC ADVERTISING IN A VIRTUAL ENVIRONMENT**
BENUTZERSPEZIFISCHE WERBUNG IN EINER VIRTUELLEN UMGEBUNG
PUBLICITÉ SPÉCIFIQUE À UN UTILISATEUR DANS UN ENVIRONNEMENT VIRTUEL

(30) Priority: 28.06.2019 AU 2019902298
(43) Date of publication of application: 27.04.2022
(73) Proprietor: Frameplay Corp, San Francisco CA 94107-0624 (US); Low Latency Media Pty Ltd, South Melbourne VIC 3205 (AU)
(72) Inventor: ROSSI, Eric, Melbourne, Victoria 3205 (AU); TROUGHTON, Jonathon, Melbourne, Victoria 3205 (AU)
(74) Representative: Loo, Chi Ching
(86) International application number: PCT/AU2020/050672
(87) International publication number: WO 2020/257881

(56) References cited:
- WO-A2-2007/041028
- US-A1- 2006 105 841
- US-A1- 2006 135 232
- US-A1- 2007 129 146
- US-A1- 2008 208 684
- US-A1- 2008 313 038
- US-A1- 2010 036 735
- US-A1- 2018 096 383

## Description

### Background of the invention

The present disclosure relates generally to advertising, and more particularly to systems and methods for providing dynamic advertising within virtual environments.

### Background of the invention

The following documents are considered background art relevant in view of the present disclosures of user specific advertising in a virtual environment: US2018/096383A1, US2006/0105841, WO 2007/041028 A2, US 2006/0135232A1, US2007/0129146A1.

Any references to methods, apparatus or documents of the prior art are not to be taken as constituting any evidence or admission that they formed, or form part of the common general knowledge.

Activities involving virtual environments such as video games are becoming more popular, even surpassing other forms of media such as print media, movies, radio and video. As such, there is an ever-increasing gap in the numbers of people that advertising companies want to target, and those that the advertisers can effectively target using traditional methods. Many individuals are watching less free to air television (previously an excellent medium for targeting young persons with disposable income), preferring such media streams like Netflix, while circulation of newspapers continues to decrease rapidly (previously a useful medium for wealthier, older targets). Subsequently, the general public are increasingly finding ways to avoid being targets of advertising, which also impacts upon industries that rely on advertising revenue to exist and make profit.

For example, one attractive advertising target group with an increasing age and income demographic is computer gamers. Not only are the numbers in the target group growing, so are the hours spent daily on gaming, and often these hours are replacing time spent on traditional media platforms such as television. Subsequently, as more older gamers with a greater disposable income spend more time gaming, advertisers are left with fewer options to target an important demographic, and gamers are being sensitised to obtrusive and obvious in game advertisements that affect the flow of game play.

With regards to computer game developers and publishers, they are currently faced with the challenge of monetising their computer games without diminishing the game experience and turning their customers off. In the early days of computer gaming, individual games were purchased for users to use in their own home on their own devices, and game developers had a reliable revenue stream based on sales of the games and the required devices. However, in present times there has been a shift towards game development and publishing based on a SaaS business model, meaning more games are free to use and developers and publishers are monetising the games via other means, some of which verge on gambling (such as game loot boxes etc). Many of the means have been met with negativity from the gaming community, with a surge in player outrage at game developers pushing for a pay to play or pay for content in-game strategy.

Further to this, the ability for new, young and/or independent game developers to create a game is near impossible without any monetisation options for them to support the growth and development. This, in turn, is creating a monopolisation by the bigger game development companies who have the resources to develop games, which also limits the number of games available. A new form of revenue, such as an easy and fair in-game advertising system would allow independent developers to generate a passive revenue stream to allow them to build the games they wish and increase the number of games available to play.

It would be attractive, practically and commercially, to provide a means for game developers to create computer games with in-built capability to display advertising material during in game play, which could then generate advertising for the game developer/publisher when the game is being played, irrespective of whether the game is played for free.

It is an object of the present invention to overcome or ameliorate the above discussed disadvantages of the prior art, or at least offer a useful alternative.

### Summary of the invention

The present invention is defined in the appended claims comprising independent claim 1 to a method and independent claim 10 to a system.

Accordingly, in a first aspect of the present disclosure, there is provided a system and method of presenting user-specific advertising material in a digital environment. The digital environment may include virtual environment comprising such as, but not limited to, a virtual reality environment, an augmented reality environment, a computer game, a simulated environment, and so forth. In some embodiments, the user-specific advertising material is presented to a user, such as a player in a game, -in response to a digital trigger, comprising embedding an object in said virtual environment that includes a display comprising the advertising material. A non-limiting example of the digital trigger may include a geo location. The digital trigger may be generated by the system. For example, a system generated digital trigger may include a pre-set time for presenting advertisements. In some embodiments, the digital trigger may be based on an input from the user. For example, a user input based trigger may include, in a game when a user pressed a key on the keypad or when a user takes a left turn in the computer game an advertising material is presented. In some embodiments, the said advertising material is presented to the user when said digital trigger is activated, wherein the user has a presence in the virtual environment as an avatar capable of activating said digital trigger. The object is communicatively connected to a server. In some embodiments, the avatar of the user may be a character in the computer game or virtual environment.

In some embodiments, the object may include such as, but not limited to, image, sight, audio (sound), and motion, aka static, video or audio ads The virtual environment may be any environment that is created by a computer or other media in which the user has a presence in said environment such as an augmented reality environment. The virtual environment may comprise digital environment. In general, the virtual environment may be any environment that may be experienced by the user for example being a part of the environment (i.e. in AR environment) or as an avatar as a proxy (for example in VR environment or computer games). The virtual environment may exist as a two-dimensional (2D), three-dimensional (3D) or stereoscopic 3D environment. In general, a 2D virtual environment will appear substantially flat when viewed by the user (i.e., the user is viewing a cross-section of the 2D virtual environment), where as a 3D virtual environment will appear to have depth when viewed by the user, and will allow the user to view the virtual environment from a diverse range of perspectives. In an embodiment, the virtual environment may be a simulated environment.

The virtual environment may be a virtual reality or an augmented reality. By virtual reality is meant any artificial, computer generated simulation or recreation of an environment or situation (be it extracted from the real world, or fictional) designed to enhance the user's feeling of being present in the situation by immersion, wherein the person's presence is simulated in a visual environment and the virtual reality replaces the user's view. By augmented reality is meant any artificial, computer generated superimposition of computer-generated images (virtual images) on a user's real-world view, thereby adding to the user's view.

While it would be understood that the virtual environment viewed by the user may be interpreted/perceived by the user as being 2D and/or 3D, the user would generally be viewing the virtual environment via a two-dimensional medium (i.e., some type of screen).

The virtual environment may be created for the purposes of business, education, navigation, health, recreation, competition, entertainment, or combinations thereof. While it would be understood that the virtual environment would be viewed by the user on a digital medium or device, the virtual environment may be animated (either fully or partially), comprise graphics, computer-generated imagery (CGI), or be based on real world (i.e., filmed) footage or photographs. Examples of virtual environments that may be used in the methods of the present invention include, for example, virtual house tours, travel/walking/driving guides, virtual instructional exercise guides and computer games. The virtual environments may be fictional environments created by graphics/animation/CGI, and may be real-world environments recreated using graphics/animation/CGI (and potentially supplemented with real-world footage) or substantially real-world environments, or real-world environments supplemented by graphics/animation/CGI.

The user is the target of the advertising material that is visible in the virtual environment, but the user is manifested in the virtual environment as an avatar. In some embodiments, the avatar of the user may be a character in the computer game or virtual environment. That the advertising material is user-specific is meant that the advertising material visible to any particular user is personalised according to one or more factors such as, but not limited to, a location, age, gender, purchasing history, browsing history, choice of virtual environment or (if applicable) avatar, additional information provided voluntarily by the user and/or combinations thereof.

By avatar is merely meant an object or being (i.e., "person") within the virtual environment that has a presence in the virtual environment and/or is participating in the virtual environment as a proxy of the user, and is capable of activating the digital trigger. In some embodiments, the avatar of the user may be a character in the computer game or virtual environment. The avatar may assume many roles or positions within the virtual environment and have different point of view insofar as what view of the virtual environment the user has at any time. The experience of the user via the avatar may be viewed by the user from any perspective, and the perspective available to the user may be dependent on whether the virtual environment is a 2D or 3D environment.

In general, the perspective available to the user in a 2D virtual environment is fixed, wherein the user has a third-person perspective of the virtual environment, such that the user can view one cross-section of the virtual environment (i.e., a side-view, or top view). The perspectives available in a 3D virtual environment vary considerably and include, but are not limited to, first-person perspective, third-person perspective, aerial (top-down) perspective, context-sensitive perspective, and/or combinations thereof.

The user may effectively assume the role of the avatar as a being (be it real or fictional or the user themselves) in the virtual environment. For example, in a virtual environment that is an augmented reality, the user is effectively the avatar viewing the virtual environment from a first-person perspective and may be augmented within the virtual environment as being part of the virtual environment.

The avatar may be an inanimate object in the virtual environment, wherein the avatar is an accessory to the virtual environment to allow the user to view or experience the virtual environment from a particular perspective. For example, the avatar may be a real or hypothetical camera that moves in correspondence to a being or an object in the virtual environment, thereby providing a third-person perspective in a 2D or 3D virtual environment. In some embodiments, the avatar may be a character selected by the user for being part of the virtual environment.

The user may have a first-person view of the virtual environment, which would be akin to the user viewing the footage obtained by a hypothetical or real front-facing camera attached to the avatar in a 3D virtual environment (i.e., the avatar is the real of hypothetical camera). Alternatively, the user may be provided with a third-person view of a 3D virtual environment, wherein the user can generally see a front, back or side view of the avatar in the virtual environment. The user may also view the avatar from a top down perspective in a 2D or 3D virtual environment, or from a side perspective in a 2D virtual perspective.

As can be determined from the preceding examples, and for the purposes of this invention, the avatar may be interchangeably considered to be an object or being in a virtual environment, and/or a hypothetical or real camera filming an avatar of the user in the virtual environment, and/or a hypothetical or real camera filming whilst attached to an avatar of the user in the virtual environment. It would be understood that as the user directs the movement of the avatar in the virtual environment, the user may direct the movement of hypothetical or real camera, and vice/versa.

For example, in an embodiment of the invention wherein virtual environment is an animated model of a well-known tourist attraction, the avatar may effectively be the user and the view of the user may be a first-person perspective, wherein the user is essentially seeing the footage that would be filmed from a hypothetical camera on or near the head of the person (simulating eye level). In another example wherein the virtual environment is based on a real world driving route, the avatar may be a car, and the view of the user may be a top down perspective of the car travelling the route, wherein the user is essentially seeing the footage what would be filmed by a hypothetical drone-camera following the car. In a further example where the virtual environment is in a computer game, the avatar may be a character in a 2D or 3D computer game and the view of the user may be a first-person perspective, wherein the user is essentially seeing the footage that would be filmed from a hypothetical camera on or near the head of the player or character in the computer game.

In some embodiments of the present disclosure, the virtual environment is within a computer game, wherein a computer game is a game played using a computer, wherein user(s) interact with objects on a screen for entertainment and/or competition. The user would be a player of the game, and the avatar of the user would be the character in the game whose movements and actions are being directed by the player. The virtual environment of the computer game may be a 2D or 3D environment.

In embodiments of the invention wherein the virtual environment is a computer game, while the avatar of the user may be a character or participant or object (could be a car, bike, gun, robot etc) within the game, the avatar may also be, or be comparable to, a hypothetical game "camera" that is controlled by the user (i.e., the user is viewing the perspective captured by the game camera as opposed to the perspective seen by the "eyes" of the character in the game). In 2D games, the game camera generally has a fixed perspective and the user can view the virtual environment in one plane with an x and y axis by moving left and right and up and down, and combinations thereof. In 3D games, the user can position the camera to view the virtual environment from all sides, utilising arbitrary camera movement in the x, y and z axis to view the virtual environment.

The computer game may be a browser game, wherein the computer game is played via the world wide web using a web browser, and these are often free and do not require user accounts (i.e., the provision of user details) for the user to play.

The computer game may be a personal computer (PC) game, wherein the game may be played without the world wide web (but can also be played online) and requires software and hardware to facilitate the game play, such as graphics, sound cards and/or processors, and is played using a personal computer. Other gaming platforms that may be used to play the computer game in the method of the present disclosure include mobile devices, such as smart phones and tablets, and consoles produced by companies such as PlayStation, Nintendo and XBOX. In general, games relying on PC and console platforms require user accounts for the user to play the game. Non-limiting examples of user accounts include Xbox Live, Steam, PSN, Epic Games, UPlay, Origin.

It would be understood that various types of computer game platforms may be web-based, but irrespective of whether the computer games are played via the world wide web, the computer game platforms (gaming platforms) used in conjunction with the method of the present disclosure would generally require a communications network to at least allow a connection to the game server(s) for the particular computer game being played by the user, wherein the game server(s) generally comprises a collection of databases that store information related to playing the game. In embodiments of the invention, the virtual environment is a 3D computer game based on a PC platform, that is connected to a game server via the internet, wherein the user must have a user account to participate.

The object would generally be embedded in the virtual environment when the virtual environment is being built. It would be understood that the object comprises a collection of code to perform various processes/tasks/roles within the virtual environment, as well as to communicate with/connect to components outside of the virtual environment required for the method of the present disclosure to work. For all intents and purposes, once built, the object would exist in the virtual environment, though may only be viewed by the user when the avatar is in a position to view the part of the virtual environment where the object exists. In embodiments of the invention, the object can be seen in the virtual environment where the object exists provided the object is in the view being seen by the user, but the user can only see the display and/or the advertising material when the avatar activates the digital trigger. In other embodiments, the object can exist or can be presented or displayed in the part of the virtual environment being viewed by the user and not be seen, because the object, along with the display and advertising material, can only be seen or heard by the user when the avatar activates the digital trigger. The advertising material may include image, audio, video, and so forth.

The virtual environment may comprise one or more objects. The object may be anything in the virtual environment that can support a display of the advertising material. The object may be viewed as a 2D or 3D object in either a 2D or 3D virtual environment. The object in the virtual environment may be a primitive object of none or limited consequence to the virtual environment, such as a tile, prism, or any 2D or 3D shape with a flat surface to display the advertising material (such as an object resembling a billboard/poster). In these embodiments, the object is effectively a canvas for presenting the advertising material, and the canvas may be suspended in the virtual environment or attached to something in the virtual environment. In these embodiments, the object would generally not be visible to the user until the digital trigger is activated and the advertising material becomes visible. For example, the object may be a flat tile for only presenting advertising material in a computer game, wherein the advertising material is only visible when the digital trigger is activated. The advertising material being presented may be an image, an audio, or a video or combinations thereof, and may or may not have a sound component.

The object may be an integral part of the virtual environment, with a surface or aspect that can be used for presenting the advertising material when the digital trigger is activated. In non-limiting examples, the object may be a part of a road, building, door, planet, combatant, body of water, living thing or animal or obstacle in the virtual environment that can display the advertising material and still provide the purpose and functionality of the object. In these embodiments, the object would generally be presented to or will be visible to the user if the object is in the view of the virtual environment being seen by the user, but the advertising material would only be presented or displayed when the digital trigger is activated. For example, the object may be part of a road that an avatar of the user is traversing, wherein the entire length of the road is visible, but the advertising material on the road is only visible when the avatar reaches said section of road that constitutes the object. In some embodiments, the advertising material may be presented without any digital trigger. The digital trigger may be system generated or based on user input.

In some embodiments, the virtual environment may include a computer game, the object may be embedded in the game play or integrated in the main video game plot. For example, the object may be a prize the avatar is seeking, or an enemy the avatar is trying to defeat, wherein successfully finding the prize or killing the enemy activates the digital trigger and the advertising material is presented or displayed to the user.

In some embodiments, the virtual environment may exist within a computer game, the object would be incorporated into the computer game while the game is being built by in game engine. By "game engine" is meant the architecture that game developers use to build (and run) a computer game. Non-limiting examples of game engines include commercially available engines such as Unreal Engine, Unity, Gamemaker, Gadot, AppGameKit, CryEngine, Amazon Lumberyard, RPG Maker, LibGDX, Urho3D and/or other proprietary/private game engines used by game development studios and individual game developers.

In some embodiments, the virtual environment is in a computer game, the object is embedded when the game is being built via a plug-in (a collection of code that is packaged and designed to do a set of tasks) that can be selected by the game builder. In general, the plug-in would be a selectable feature/asset/component to be added to the game (anywhere in the game), wherein the addition not only creates the object in the virtual environment, but also provides the required functionality of the object. In some embodiments, the plug-in is a software development kit (SDK).

The functionality of the object includes the capability of the object to communicate with one or more servers, wherein the server may be a game server (if the virtual environment is a computer game) and/or may be an external server. The server(s) may comprise one or more databases that store information in relation to the activities in the virtual environment (such as the game play), the user information, and the advertising material, wherein each of the servers is connected to the virtual environment via a communications network.

The user information may be any information collected or obtained from a user, either with the assistance or knowledge of the user, or via legal means of obtaining information from a user participating in the virtual environment. The user information may be extracted from an IP address and this may include location co-ordinates for the user. The user information may be extracted from a user account or a sign-up/purchase agreement, and may include age, gender, marital status, email address, ethnicity, product preferences etc. Accordingly, the user-specific advertising material may be categorised according to any of the user information available. By "specific" is meant that the advertising material would be deemed appropriate or welcome to a particular user, or user "type", being targeted. In non-limiting examples, a subset of advertising material may be specific to users that are female, aged 20-30 and live in the southern hemisphere, or a subset of advertising material may be specific to users that are female, married and have made an online travel purchase, or a subset of advertising material may be specific to users that are male, aged 20-50 and have a UK email address, or a subset of advertising material may be specific to users that are aged 40-65, identify as Russian and are single etc.

The functionality of the object includes the capability of the object to determine if the avatar of the user activates the digital trigger. The digital trigger may be activated by any means, but will generally relate to a proximity relationship between the avatar and the object in the virtual environment. Specifically, the trigger would be activated by the avatar entering an activation zone around the object. Depending on what the avatar is and/or the perspective of the virtual environment being viewed by the user, "entering" the activation zone may mean different things. For example, in some embodiments, the user has a third person perspective of virtual environment, and the avatar is a person or vehicle exploring the virtual environment, the digital trigger would generally be activated when the person of vehicle enters the activation zone. However, in other embodiments, wherein the user has a first-person perspective of the virtual environment, then it may be that the avatar is the hypothetical or real camera providing the view of the virtual environment, and this camera must be deemed to have entered the activation zone. The activation zone may be a 2D area in a 2D virtual environment, or 3D volume in a 2D or 3D virtual environment. The avatar and/or camera need not be facing (i.e., looking at) or engaging with the object for the advertising material to be presented or displayed.

In some embodiments, where the virtual environment is within a VR environment, an AR environment, a digital environment and a computer game. The activation zone functionality is due to a collider software associated with the object in the virtual environment, and this functionality forms part of the plug-in that is used to embed the object in the virtual environment. By collider (may also be referred to as a trigger collider) is meant an invisible component that marks the shape or boundaries of an object to define an area within which would constitute a collision with the object if an avatar were to enter the area. In general, the collider would be a trigger collider in that the collider does not behave as a solid object, but rather allows the avatar to pass through the space. For the purposes of describing the present disclosure, the "collision" would be the activation of the digital trigger to display the advertising material on the object. In some embodiments, both the object and boundaries of the activation zone are both invisible prior to the activation. The collider may be a primitive collider type, such as a box collider, sphere collider, capsule collider or 2D square collider or 2D circle collider, and/or combinations thereof (i.e. compound colliders). The display of the advertising material is activated by the avatar entering an activation zone (i.e., having a collision).

In some embodiments, for a geo location trigger and AR environment, the collider works similarly as collider works in computer game, triggered by a geo location, and can trigger the objects via virtual or AR methods.

The functionality of the object also includes the capability of the object to measure the engagement of the user (via the avatar, or real or hypothetic camera if appropriate) with the advertising material to monetise the provision of the advertising material within the virtual environment. In this instance, the advertisers may be charged an amount for the display of the advertising material within the virtual environment that is proportional to the user engagement with the advertising material. By "engagement" is meant any detectable acknowledgement of the advertising material by the user, either real, perceived or assumed, as well as interacting with the advertising material such as by clicking or other user control inputs. Further, the user engagement comprises one or more interactions via user control input. Metrics that may be used to quantify the engagement include, but are not limited to, time spent in the activation zone, time spent looking at/facing the advertising material, proximity to the advertising material, interaction with the advertising material or object with the advertising material, percentage of advertising material viewed by the user, number of activations of the digital trigger and/or number of views of the advertising material. The user engagement may be quantified from the activation of the digital trigger until such time as the advertising material is no longer displayed. Alternatively, the user engagement may be quantified at specific time points while the advertising material is presented or displayed, or for a set amount of time while the advertising material is presented or displayed. The metrics may be collated by any appropriate means, wherein the engagement with the advertising material can be scored or provided a monetary value to be charged to the provider of the advertiser.

The disclosed system may be configured to facilitate the collection and transfer of user information from, for example, a user account, a game server and/or an IP address, to a server the object is connected to via a communications network storing the user information in one of more databases, and processing user details to select appropriate advertising material for each user (i.e., user-specific advertising material). The system may facilitate the transfer of user-specific advertising material for display in the virtual environment, wherein the advertising material is stored in one or more databases on a server the object is connected to via a communications network. Further, the system may facilitate the collection and transfer of engagement information for the presented advertising material to one or more databases on a server the object is connected to via a communications network.

An embodiment of the present disclosure provides a method of presenting user-specific advertising material in a virtual environment. The method includes presenting, by a presenting module, a virtual environment to a user. In some embodiments, the user has a presence in the virtual environment as an avatar capable of activating one or more digital triggers. The method also includes embedding by an advertising module, an object in said virtual environment, the object is communicatively connected to a server, wherein the object is capable of presenting the user-specific advertising material. In some embodiments, the user-specific advertising material. Is presented when one or more digital trigger is activated. The digital triggers may be activated by the system or may be activated based on an input from the user. A non-limiting example of the digital trigger may include a geo location. The method further includes determining, by the advertising module, if there is a digital trigger in the virtual environment. The method furthermore includes presenting, by the presenting module, at least one advertising material via the object based on the digital trigger, wherein said advertising material is visible to or heard by the user when said digital trigger is activated.

In some embodiments, the method further includes presenting, by the presenting module, at least one advertising material via the object in response to the digital trigger.

According to an aspect of the present disclosure, the method also includes enabling, by the presenting module, the user to trigger one or more digital triggers. The one or more digital triggers may be activated when the avatar is within an activation zone for the object, wherein both the object and the advertising material is displayed presented only when the digital trigger is activated, further wherein the object and the advertising material is live rendered in run-time, fully native to ensure no negative user experience, wherein the digital trigger comprises system generated triggers and triggers based on user inputs.

According to an aspect of the present disclosure, the digital trigger is activated when the avatar is within an activation zone for the object. The object may comprise at least one of an image, an audio, and a video.

In some embodiments, both the object and the advertising material is presented or displayed only when the digital trigger is activated. In alternative embodiments, the object and/or the advertising material may be presented without an activation of the one or more digital triggers.

According to another aspect of the present disclosure, the object and the advertising material is live rendered in run-time, fully native to ensure no negative user experience.

In some embodiments, the advertising material may comprise at least one of an audio, a video, and an image. The user can view the advertising material or may hear the advertising material.

According to another aspect of the present disclosure, the method includes quantifying, by a user engagement module, user engagement with the object, wherein the quantifying comprises quantifying the engagement of the avatar of the user with the object. The engagement or user engagement may include one or more interactions of the user with the advertising material via user control input.

The method may further include creating an object and loading advertising material comprising static imagery, video, audio etc.; and loading an image/images from an external database (so the files never need to be stored locally on the system).

According to another aspect of the present disclosure, the quantification of the user engagement is based on based on at least one of: a duration of time the avatar remains in the activation zone of said object; a position of the avatar with respect to the object during the time the avatar remains in the activation zone of said object; and a duration of time the avatar interacts with the object with respect to the duration of time the avatar remains in the activation zone of said object.

According to another aspect of the present disclosure, the method further includes charging, by a payment module, a fee from an advertiser of the advertising material, wherein the fee is proportional to the quantity and a quality of user engagement with the object in the activation zone.

According to another aspect of the present disclosure, the virtual environment exists with a computer game, further wherein the avatar of the user is a character in the computer game, wherein the computer game is a 3D computer game played with a first-person perspective.

According to another aspect of the present disclosure, the method further includes tracking and recording, by the advertising module, one or more interactions of the user with at least one of the displayed object and the displayed advertising material.

According to another aspect of the present disclosure, the activation zone is created by a collider embedded with the object in the virtual environment, wherein the virtual environment comprising at least one of a virtual reality environment, an augmented reality environment, a computer game, and a digital environment..

In some embodiments, for a geo location trigger and AR environment, the collider works similarly as collider works in computer game, triggered by a geo location, and can trigger the objects via virtual or AR methods.

In some embodiments, the trigger can be a geo location rather than just a location in a game.

In some embodiments, the object may be specific technical placements in a network location (aka a store or a theatre) that may enable a geo-based augmented reality trigger for each person/user.

A non-limiting example of the augmented reality environment may include - for entertainment: a user/viewer sitting in a specific movie theatre, watching a movie, and the objects in the movie are directly related to the individual viewer in the audience if they are wearing AR glasses to watch the film, therefore personalizing the experience for the viewers. In retail, an AR environment example may include: any shopper walks into a retail store with AR glasses on and sees unique pricing on items in the store based on geo location. In Real Football Stadium, AR environment may include: advertising material in the stadium relevant to each user is shown or presented if they are wearing AR glasses.

According to another aspect of the present disclosure, the method further comprising enabling, by an uploading module, the user to upload personal content for appearing in the computer game, wherein the presenting module displays the personal content of the user as part of the computer game.

According to another aspect of the present disclosure, the user-specific advertising material is determined based on user information extracted from at least one of an IP address of the user, and user information extracted from a computer game user account of the user.

Another embodiment of the present disclosure provides a system for presenting user-specific advertising material in a virtual environment. The system includes a presenting module configured to present a virtual environment to a user, wherein the user has a presence in the virtual environment as an avatar. In some embodiments, the presenting module enables the user to trigger one or more digital triggers. The system further includes an advertising module configured to embed an object in said virtual environment, the object is communicatively connected to a server, wherein the object is capable of presenting the user-specific advertising material when one or more digital trigger is activated; and determine if there is a digital trigger in the virtual environment, wherein the presenting module presents at least one advertising material via the object in response to the digital trigger, wherein said advertising material is visible to or hear by the user when said digital trigger is activated.

According to an aspect of the present disclosure, the digital trigger is activated when the avatar is within an activation zone for said object, wherein both the object and the advertising material is displayed only when the digital trigger is activated, further wherein the object and the advertising material is live rendered in run-time, fully native to ensure no negative user experience. In some embodiments, the digital trigger may include system generated/defined triggers and triggers based on user inputs. A non-limiting example of the system generated or system defined trigger may include a time defined for presenting an advertising material. A non-limiting example of user inputs based triggers may include a button press by the user or a geo location of the user in the virtual environment.

According to another aspect of the present disclosure, the system further includes a user engagement module configured to quantify user engagement with the object, wherein the user engagement module quantifies the engagement of the avatar of the user with the object. The object may include at least one of an image, an audio, and a video.

According to another aspect of the present disclosure, wherein the user engagement module quantifies the user engagement based on at least one of: a duration of time the avatar remains in the activation zone of said object; a position of the avatar with respect to the object during the time the avatar remains in the activation zone of said object; and a duration of time the avatar interacts with the object with respect to the duration of time the avatar remains in the activation zone of said object.

According to another aspect of the present disclosure, the system further comprising a payment module configured to charge a fee from an advertiser of the advertising material, wherein the fee is proportional to the quantity and a quality of user engagement with the object in the activation zone. In some embodiments, the engagements may consist of interactions by the user via control inputs. In some embodiments, the advertising material comprising at least one of an audio, a video, and an image.

According to another aspect of the present disclosure, the virtual environment exists with a computer game, further wherein the avatar of the user is a character in the computer game, wherein the computer game is a 3D computer game played with a first-person perspective.

According to another aspect of the present disclosure, the advertising module is further configured to track one or more interactions of the user with at least one of the displayed object and the displayed advertising material.

In some embodiments, the activation zone is created by a collider embedded within the object in the virtual environment, wherein the virtual environment comprising at least one of a virtual reality environment, an augmented reality environment, a computer game, and a digital environment.

In some embodiments, the advertising module is further configured to create an object and load advertising material comprising static imagery. The advertising module may load an image/images from an external database (so the files never need to be stored locally on the system).

According to another aspect of the present disclosure, the system further comprising an uploading module configured to enable the user to upload personal content for appearing in the computer game, wherein the presenting module displays the personal content of the user as part of the computer game.

According to yet another aspect of the present disclosure, the user-specific advertising material is determined based on user information extracted from at least one of an IP address of the user, and user information extracted from a computer game user account of the user.

### Detailed description of the invention

Preferred features, embodiments and variations of the invention may be discerned from the following detailed description which provides sufficient information for those skilled in the art to perform the invention. The detailed description is not to be regarded as limiting the scope of the preceding summary of the invention in any way.

Specific embodiments of the present invention are described, by way of example only, with reference to the accompanying drawings, in which:
**Figure 1** shows a flow chart of developing a computer game for use in the method of the present disclosure (A) and game when used for the method of the present disclosure (B);
**Figure 2** is a view of a computer game when (A) the digital trigger has not been activated and (B) when the digital trigger has been activated;
**Figure 3** shows the capture of user engagement data in relation to (A) size and closeness of the advertising material and (B) skew of the advertising material;
**Figure 4** shows the capture of user engagement data in relation to the percentage of the advertising material visible to the user;
**Figure 5** shows the capture of user engagement data in relation to the obstruction of the advertising material from the view of the user;
**Figure 6** shows the capture of user engagement data in relation to the ratio change of the advertising material from the view of the user;
**Figure 7** is a schematic of the components of the method of the present disclosure and the communicative connections; and
**Figure 8** illustrates use of pixel sampling by the system of the present disclosure to identify how much of the ad is being shown to the user or player in the virtual environment.

Referring to Figure 1, the method of the present disclosure may be utilised to display user-specific advertising material in a virtual environment that is within a computer game, wherein the user is manifested as an avatar that is a player in the game. As per Figure 1(A), the object is a plug-in that can be selected when the game developer is building the game using a game engine such as, for example, Unreal Engine or Unity. The object becomes part of the virtual environment of the end product computer game and can then be registered to participate in the method of the present disclosure (i.e., the object is registered to be in communication with one or more servers and activate the required functionality) prior to the game being completed and released for sale and use.

The method includes creating a means for game developers to create a stream of advertising revenue that is effectively built into the computer game (i.e., it is inherent to the product that is the computer game) such that the revenue is not dependent on sales of the game, but rather use of the game irrespective of whether the user of the game purchases the game or pays to use the game.

Figure 1(B) shows the basic process of the method of the present disclosure once the computer game has been built with the embedded object that is capable of presenting the user-specific advertising material. In the embodiment described, the object cannot be seen in the virtual environment, and the digital trigger for presenting the advertising material is the avatar of the user moving into an activation zone within the virtual environment. Upon activation, the user information is collected and sent to a server for evaluation, wherein an appropriate advertisement is selected from a server. The advertising material is sent from said server to the computer game in real time to be displayed, wherein by "displayed" is meant that the object become visible as a canvas for the advertising material to be viewed by the user as long as the avatar of the user is in the activation zone. In real time, user engagement information with the advertising material is collected and sent back to a server to be quantified and presented to the owners of the advertising material to allow for the amount of advertising revenue owed to the game developer (or the game publisher) to be determined.

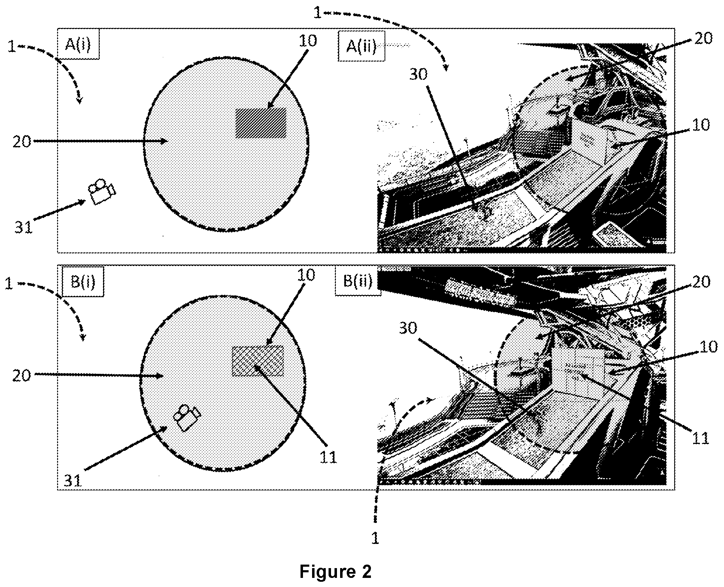

Figure 2 exemplifies the process of Figure 1(B) in a virtual environment 1 that is a computer game. The images shown are of an overview of the virtual environment as seen by the game developer, but the embodiments described in the following figures are based on the avatar of the user being a character in a game 30, which is played from a first-person perspective, wherein the user is essentially seeing the footage that would be filmed from a hypothetical camera on or near the head of the avatar (simulating eye level), or following just behind the avatar (the "in-game camera" 31).

Figure 2(A) shows a schematic (i) and a game view (ii) of a virtual environment 1, wherein the object is a tile for advertising material 10 that has a 3D activation zone 20 in the shape of a sphere surrounding the tile, wherein the tile cannot be seen in the game by the in-game camera 31 because the avatar 30 is not within the activation zone. In the embodiment shown, the tile 10 is essentially a 2D billboard/poster/canvas type object, wherein the advertising material 11 is projected on the tile. In figure 2(B), the avatar 30 enters the activation zone 20 and the tile 10 becomes visible to display the advertising material 11, which is viewed from the perspective of the in-game camera 31. While the activation zone is shown in Figure 2, the boundaries of the zone would generally not be seen within the virtual environment of the computer game. When the avatar leaves the activation zone, the tile 10 and the advertising material 11, would no longer be seen by the user.

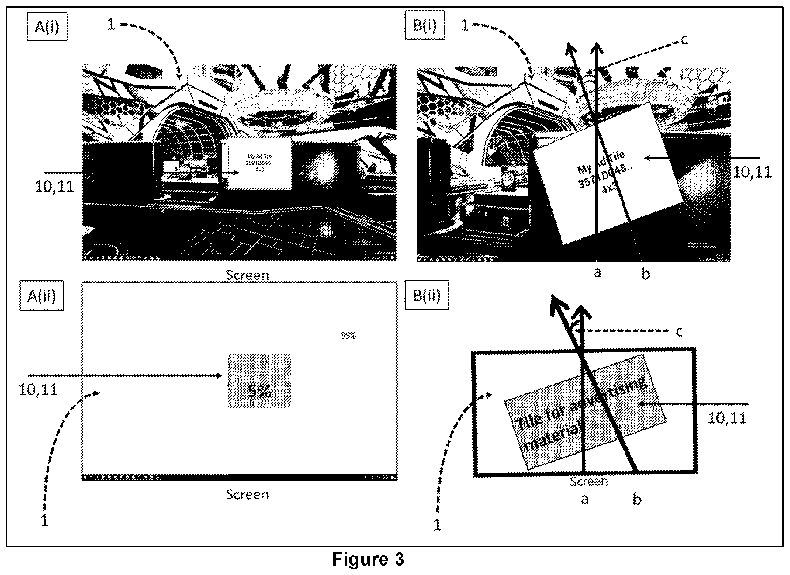

Figures 3-6 show how the user engagement with the object may be quantified. There are various methods to capture the engagement metrics of the user, and these methods may relate to determinations of the quality of the view the user has of the advertising material, which may correlate to the amount of advertising revenue owed to the developer of the computer game, or may merely be informative. Ideally, the user would be able to view the advertising material as intended (i.e., a full view, front on, unobstructed), but this cannot be guaranteed in embodiments of the invention where the advertising material is displayed in a 3D environment and the view of the material can be determined by the movements of the avatar and the view of the in-game camera (i.e., even if the avatar is moving forward, the in-game camera may be able to view a different angle). As such, deviations from the user having a perfect view of the advertising material may be correlated to advertising revenue, and the capability to detect these deviations would be comprised within the plug-in for the tile inserted in the game during development. It would be understood that the more information in relation to user engagement that could be captured via the object embedded in the game, the more accurately advertisers may be charged for the advertising material displayed in the computer game.

In embodiments of the invention, information in relation to user engagement captured during game play may include recognition of when a user is looking at the advertising material (this may not be limited to the user seeing the advertising material on the screen, but may also include recognition of when the avatar/in-game camera is directly facing the advertising material), the duration of the user looking at the advertising material, how far from the advertising material the avatar is, at what angle the user is viewing the advertising material, how big the advertising material is on the screen being viewed by the user, and/or whether the user directly interacts with the advertising material in the virtual environment. In preferred embodiments of the invention wherein the virtual environment is a computer game and the avatar must enter an activation zone for the tile to display the advertising material, the user engagement is measured form the commencement of the display until such time as the avatar exits the activation zone and the advertising material is no longer displayed. Measurements continue after leaving the activation zone.

Figure 3(A) shows the full screen of a game view (i) and a schematic view (ii) and of a virtual environment 1, wherein the object is a tile 10 for presenting advertising material 11, wherein the digital trigger has been activated. The view shown is from the in-game camera as a first-person perspective, and represents what the user would see on the screen. In the figure shown, the tile with the advertising material takes up 5% of the user's view of the screen when activated, though the viewing percentage may be between 1% and 100% of the screen. In other embodiments of the invention, the viewing percentage may be, for example, about 10%, about 15%, about 20%, about 30%, about 45%, about 50%, about 75%, about 90% or about 99%. It would be understood that in Figure 3(A), if the avatar of the user were to move closer to the tile with the advertising material 10,11, the viewing percentage would increase, and vice versa. This may be correlated to an increase/decrease in advertising revenue.

Figure 3(B) shows the full screen of a game view (i) and a schematic view (ii) and of a virtual environment 1, wherein the object is a tile 10 for presenting advertising material 11, wherein the digital trigger has been activated. The view shown is from the in-game camera, and represents what the user would see on the screen. Because the virtual environment of the computer is a 3D environment, and the view of tile with the advertising material 10,11 embedded in the game may be skewed depending on the position of the avatar and the perspective of the in-game camera. In Figure 3(B), the angle c between the user view vertical axis (line a) and 2D projection vertical axis of the advertising material 11 on the tile 10 (line b) is shown. The user may direct their avatar move around the tile with the advertising material 10, 11 (but within the activation zone), resulting in an unskewed view of the advertising material, which could correlate to an increase in advertising revenue.

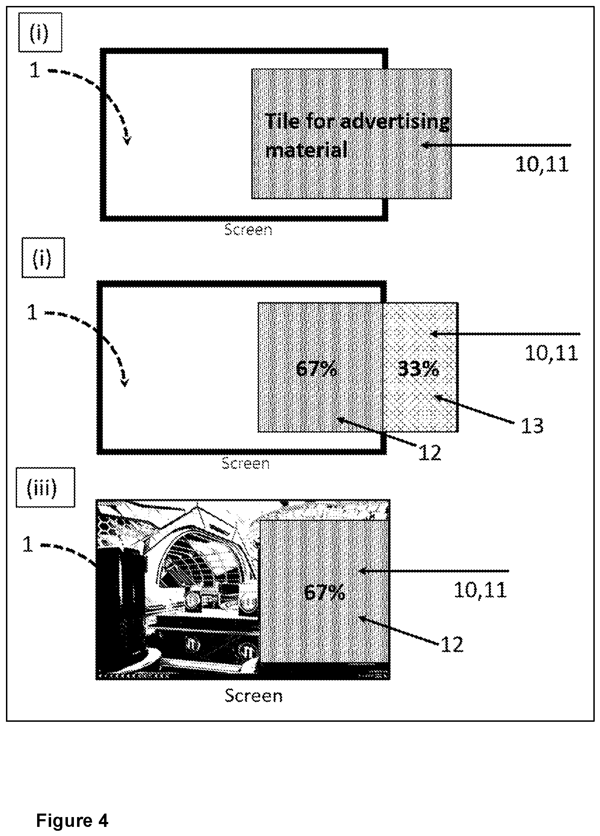

Figure 4 shows the full screen of a game view (iii) and a schematic view (i) and ii) and of a virtual environment 1, wherein the object is a tile 10 for presenting advertising material 11, wherein the digital trigger has been activated and the avatar is close to tile. Because the virtual environment of the computer is a 3D environment and the avatar may activate the digital trigger for presenting the advertising material from various angles and may move around the tile presenting the advertising material once it is activated, and the view of tile with the advertising material 10,11 embedded in the game may be truncated depending on the position of the avatar and the perspective of the in-game camera. The view shown is from the in-game camera, and represents what the user would see on the screen. Figure 4(i) shows the full tile with the advertising material 10, 11 and the space the tile would occupy if the avatar was further away from the tile in the virtual environment 1. As seen from Figure 4(ii) and (iii), based on the perspective of the in-game camera, a portion 12 of the advertising material is visible to the user viewing the screen, while a portion 13 of the advertising material cannot be seen. The user may direct their avatar move within the virtual environment, which, provided the avatar remains in the activation zone, may result in a full view of the advertising material, which could correlate to an increase in advertising revenue.

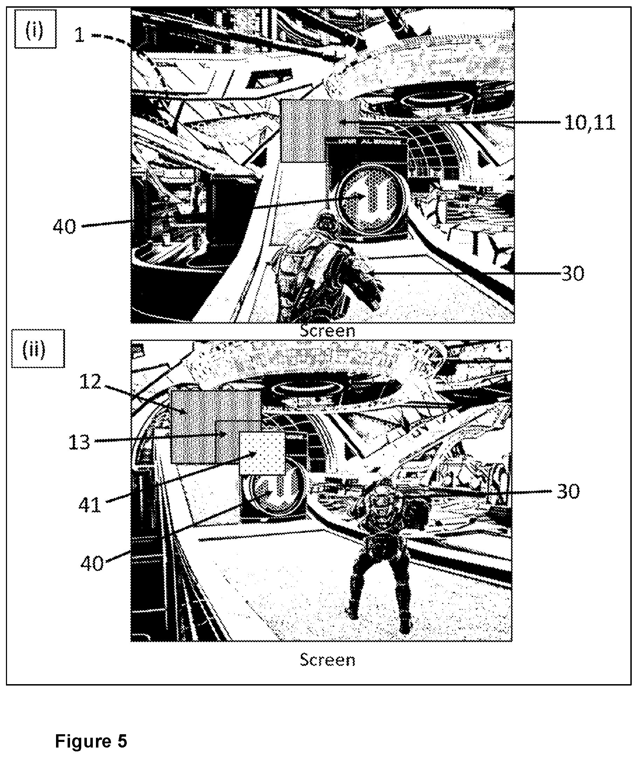

Referring to Figure 5, the user view of tile for presenting the advertising material may be obstructed or obscured by components 40 of the virtual environment 1 that are part of the computer game. In embodiments of the invention, ray-casts (or lines-traces) may be projected from the in-game camera to the tile presenting the advertising material to determine what the user can and cannot see on the screen they are viewing, and this can detect if the view of the advertising material is obstructed, and this functionality would be comprised within the plug-in for the tile inserted in the game during development. Figure 5(i) shows an avatar 30 seen by the user of a screen with a first-person perspective view (based on an in-game camera behind the avatar) that has entered the activation zone for the tile presenting the advertising material 10,11, but there are other game components not linked to the tile in the virtual game environment that are blocking the view of the advertising material 40. In particular (as shown in Figure 5(ii)) (which is a view of the game from outside of the in-game camera, as captured during game development), a section 41 of the obstacle 40 is blocking a portion 13 of the advertising material, wherein only the portion 12 is visible to user on the screen. The user may direct their avatar move within the virtual environment and around the obstacle 40, which, provided the avatar remains in the activation zone, may result in a full view of the advertising material, which could correlate to an increase in advertising revenue.

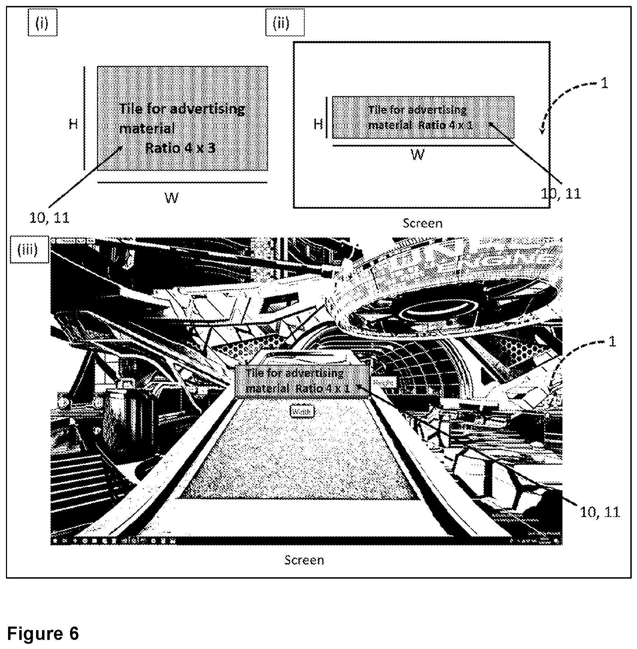

Figure 6 shows the full screen of a game view (iii) and a schematic view (ii) and of a virtual environment 1, wherein the object is a tile 10 for presenting advertising material 11, wherein the digital trigger has been activated. Figure 6 shows that the view the user has of the tile presenting the advertising material may be skewed (Figure 6(iii)), and the change in the ratio of the advertising material as intended to be viewed (Figure 6(i)), and the how the advertising material 10, 11 is viewed by the user from a first person perspective of an avatar in the virtual environment 1 (Figure 6(ii) and (iii)), can be calculated.

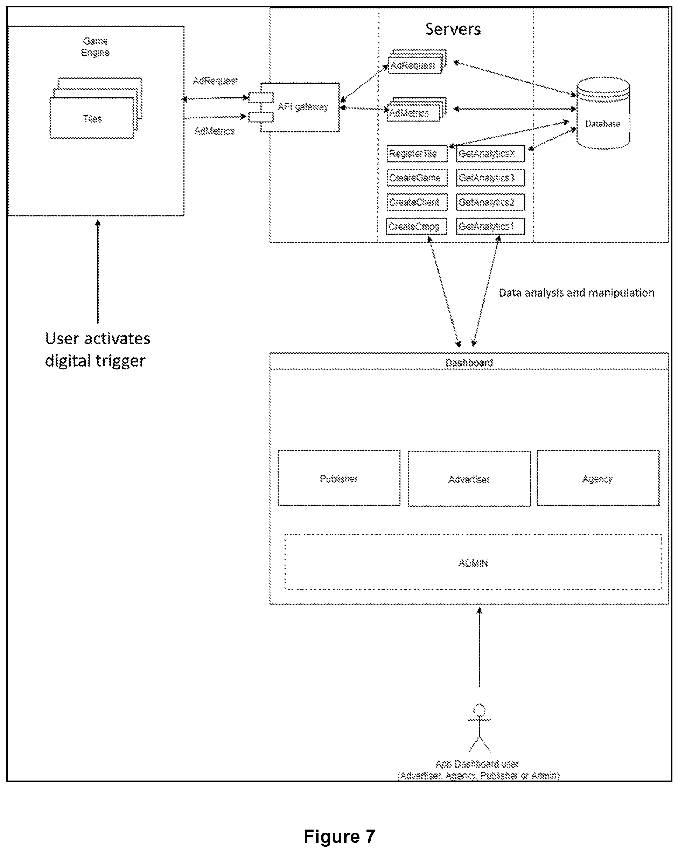

Figure 7 shows a high-level architecture diagram of the components of an embodiment of the method invention. In the embodiment shown, the backend comprises servers, databases and containers, and the reporting Dashboard provides metrics for the Advertiser, the Publisher (i.e. game developer) and any associated advertising Agency, preferably through an App. As seen from the diagram, when the user activates the digital trigger, an advertising material request (AdRequest) is made based on the user information (stored in a database), and the user-specific advertising material is selected from an advertiser database and displayed to the user (subject to information stored in a Publisher database). The user engagement data (AdMetrics) is then sent back to the database for analysis and reporting on the Dashboard after manipulation. The Advertiser database would include details of the advertiser, the advertising material and type (i.e. image or video), the aspect ratio and image resolution information of the advertisements, and/or advertiser approvals for the types of games that are appropriate for the advertising material (i.e., age restrictions). The Publisher database would include, for example, all details about the game wherein the tiles have been embedded, types of content allowed for the game and any exclusions.

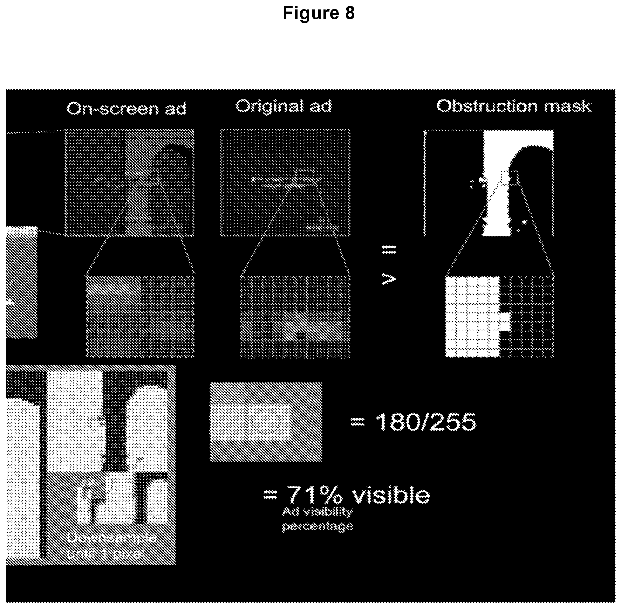

An advertising material is shown in the virtual environment to the user in response to a digital trigger. The system of the present disclosure is configured to identify how much of the advertising material to be shown to the user (i.e. player of the computer game in the virtual environment). The system uses pixel sampling as shown in the **Figure 8** to identify how much of the ad is being shown to the player. In pixel sampling, the system grabs every frame of the rendered game and compares it to as many ads (i.e. advertising material) are potentially on screen. There may be a predefined limit e.g. 16 ads on number of advertising material that can be shown in the virtual environment (e.g. a computer game being played on a screen of the computer of the user). For each on-screen ad, the disclosed system may invert the camera's perspective to flatten the screen version of the ad and compare that to the original ad, at a 64x64 resolution. The comparison may involve de-lighting the screen version, to make it more similar to the original ad provided by the server, and a categorisation of 0 (ad visible) or 1 (ad blocked) for the hue, saturation and value components of each pixel. If any of the HSV components are blocked, we say the pixel is blocked. The black and white image is reduced to 1 grey pixel to get the average visibility of that ad for that frame.

In some embodiments, the disclosed system may allow developers of the virtual environment such as, computer game to choose what style of advertisement or advertising material is appropriate for the virtual environment or computer game. A broad stroke of limited top-level filters may provide enough scope to account for the majority of developer use cases. In some embodiments, the system may use metatags for matching game styles with advertising material for the virtual environment or the game.

The style of the advertising material creative, individual elements inside of a creative can be mixed however the overall look and feel of an advertisement may need to fit a defined category. The non-limiting examples of the category for the advertising material may include Logo and/or Text, Abstract, Stylised, and Realistic. The Logo and/ or Text may include an ad creative which only contains text and/ or logos and a plain background Other possible category names: Basic / Simple / Pure / Minimal. The Abstract may include an ad creative that contains elements that consist primarily of shape, form, colour and line to create a composition which may exist with a degree of independence from visual references in the world. The Stylised may include an ad creative that contains image elements which are heavily stylised or exaggerated to the point of not being real. The Realistic may include an ad creative that contains photographic elements or imagery that may not be considered stylised.

Further, in some embodiments, the system ( or the advertising module of the system) is configured to identify the player (i.e. the user) across computer games, platforms and engines without the existence of current methods using a browser cookie. The system may assign a unique identifier to the player (or the user) based on which the player may be identified across various computer games or virtual environments. The system may use a combination of information to identify unique devices. For example, the system may use an IP address recorded from the initial webrequest to the server. The IP address then may be enriched with other data that the system have about this IP such as previous sessions or behaviours and locations. On desktop platforms, the system may grab or capture a hash of the system hardware classes. For mobile devices the system may grab an Android or iOS hardware id as well as the devices Advertising Identifier.

Further, the disclosed system is configured to enable each Ad Space in the virtual environment to request a unique advertisement for presenting. This means if there are five Ad Spaces in the virtual environment then these five ad spaces can accommodate or display five different advertisements or advertising material. Further, the system is configured to present advertising material by matching the ad type with a background of the virtual environment or game type so that ads don't stuck out. This means the advertising material displayed may be based on the background or type of the virtual environment. In some embodiments, to ensure that the players experience (e.g. experience of playing games) is not affected because of large number of unique ads on screen, the system may allow Ad Spaces to share advertisements. This means the system may allow a large number of Ad Spaces to be on screen (or display of the computer of the user) all showing the same ad, the ads telemetry data can be aggregated and the players experience remains unaffected. This may also allow the system to cater for sports games with a large number of banner ads. The system may be configured to 'link' ad spaces together, so as to display the same ad on all the 'linked' ad spaces. This may help with performance, and allow the developer to easily mimic real world situations like ads around the side of a soccer stadium. The system may allow the developers (or the user) to create child or Synchronized Ad Spaces that inherit the parent Ad Space's functionality. This allows to show the same advertisement of a group of Ad Spaces, for example a repeated banner ad around the outside of a sports stadium. The system may download the advertisement texture at run time and load it onto a material )such as advertising material) that is shared between all synchronized Ad Spaces. Further, the system of the present disclosure is configured to collect data such as, but not limited to, telemetry data from each of Ad Space individually and send to the server for aggregated. The server may be in communication with the system.

The advertising material may be of one or more advertisers. The system may track and record of the user(s) with the advertising material of the advertiser(s) and may generate one or more metrics such as, impressions. The system may share these metrics with the advertisers and allow the advertisers to link the metrics to their current way of doing things for further tracking or marketing etc. with third parties such as, but not limited to, Google Campaign Manager. In some embodiments, the system may allow the advertisers to implement a way for integrating in game advertising with google campaign manager to show and verify the impressions.

For example, the advertisers may use the system to generate impression tag URL(s). the advertisers then may use the system or an interface of the system to configure an advertising campaign with impression tag URL(s). When a user or gamer plays a game that is connected to the system of the present disclosure, then the system may deliver advertising material comprising one or more ads to user/gamer, and telemetry is sent from the gamer to the system. The system may process the telemetry and uses a suitable method such as, but not limited to, an impression quality algorithm to determine if an impression occurred. When the impression has occurred, the system may trigger the impression tag URL, this in turn may send information to the advertisers or third-party tracking system (such as Google Campaign Manager).

The disclosed system and method are configured to display advertising material comprising ads in a game that is being played by a user, and track the interactions of the user with the ads without impacting the playability (i.e. fps, responsiveness, latency, lag, etc.) and experience of the user. The system is configured to determine and/or analyse one or more variables and the unknown relationship(s) between the variables associated with the display or tracking of ads. Examples of the variables may include: Activation - methods (single, multiple or all) and point of activation; Shape and size of activation radius; Tracking of views - quantity, time; Tracking of view - quality (angle, visibility); Load caused by one or more variables; delivery performance for players worldwide, and so forth. Further, the system may be used by a plurality of users simultaneously without degradation in performance. For example, the system may be used by 1,000,000 users or devices with no performance degradation even with increase of users or players or devices (to more than 1,000,000).

Further, the disclosed system is configured to create an object and load a static image (or advertising material) on the basis of a player's exact position. The player is a user or avatar of the user in a virtual environment or a computer game. The system is further configured to load an image, such as the static image, from an external database with respect to the system. In some embodiments, the system may load video (with or without sound) during gameplay i.e. the virtual environment. In some embodiments, the system may show video in the virtual environment, show a picture in the virtual environment (or game engine), and show a 3D object in game engine. The system is configured to load objects in variable quality such as, but not limited to, 720p, 1080p, 4k, and so forth. The system is configured to determine through what non-intrusive (to gameplay) manner can an ad object be loaded when a player is near the defined ad space. Further, the system is configured to reliably activate ad objects when a player is near, but not in visible range of, an ad space (for example around a corner). Further, the system may enhance activation radius to be editable in shape; activate ad when player is far away; enhance activation radius to be editable in size; activate many ad spaces at once, such as in a court/field-based sports (i.e. soccer or basketball) game; enhance activation radius to be detached from ad space so it can be placed far away; enhance activation radius so it can be attached to multiple ad spaces.

In compliance with the statute, the invention has been described in language more or less specific to structural or methodical features. The term "comprises" and its variations, such as "comprising" and "comprised of" is used throughout in an inclusive sense and not to the exclusion of any additional features. It is to be understood that the invention is not limited to specific features shown or described since the means herein described comprises preferred forms of putting the invention into effect.

Any embodiment of the invention is meant to be illustrative only and is not meant to be limiting to the present disclosure. It should be appreciated that various other changes and modifications can be made to any embodiment described without departing from the scope of the invention.

## Claims

1. A computer-implemented
method of presenting user-specific advertising material (11) in a virtual environment (1), comprising:
presenting, by a presenting module, a virtual environment (1) to a user, wherein the user has a presence in the virtual environment (1) as an avatar (30);
embedding, by an advertising module, an object (10) in said virtual environment (1), the object (10) is communicatively connected to a server, wherein the object (10) is capable of presenting the user-specific advertising material (11) when one or more digital trigger is activated;
determining, by the advertising module, if there is a digital trigger activated in the virtual environment (1);
presenting, by the presenting module, at least one advertising material (11) via the object (10) based on the digital trigger, wherein said advertising material (11) is visible to or heard by the user when said digital trigger is activated;
identifying, by the presenting module, a percentage of at least one original ad of the advertising material (11) that is visible as on-screen ads within a field of view of the user when the visible advertising material (11) is presented to the user via the object (10), wherein identifying the percentage comprises performing a pixel sampling operation on the advertising material (11) rendered from the virtual environment (1); and
tracking and recording, by the advertising module, one or more interactions of the user with at least one of the displayed object (10) and the displayed advertising material (11).

2. The method of claim 1 further comprising enabling, by the presenting module, the user to trigger one or more digital triggers, wherein the one or more digital triggers is activated when the avatar (30) is within an activation zone for the object (10), wherein both the object (10) and the advertising material (11) is presented when the digital trigger is activated, further wherein the object (10) and the advertising material (11) is live rendered in run-time, fully native, wherein the digital trigger comprises system generated triggers and triggers based on user inputs.

3. The method of claim 2 further comprising quantifying, by a user engagement module, user engagement of the advertising material (11) based on the pixel sampling operation.

4. The method of claim 3, wherein the quantification of the user engagement is based on based on at least one of:
a duration of time the avatar (30) remains in the activation zone of said object (10), wherein the object (10) comprises at least one of an image, an audio, and a video;
a position of the avatar (30) with respect to the object (10) during the time the avatar remains in the activation zone of said object (10); and
a duration of time the avatar (30) interacts with the object (10) with respect to the duration of time the avatar (30) remains in the activation zone of said object (10).

5. The method of any one of claims 4 further comprising charging, by a payment module, a fee from an advertiser of the advertising material (11), wherein the fee is proportional to the quantity and a quality of user engagement with the object (10) in the activation zone, wherein the advertising material (11) comprising at least one of an audio, a video, and an image.

6. The method of claim 5, wherein the virtual environment (1) exists with a computer game, further wherein the avatar (30) of the user is a character in the computer game, wherein the computer game is a 3D computer game played with a first-person perspective.

7. The method of claim 6, wherein the activation zone is created by a collider embedded with the object (10) in the virtual environment (1), wherein the virtual environment (1) comprising at least one of a virtual reality environment, an augmented reality environment, a computer game, and a digital environment.

8. The method of claim 7 further comprising enabling, by an uploading module, the user to upload personal content for appearing in the computer game, wherein the presenting module displays the personal content of the user as part of the computer game.

9. The method of claim 8, wherein the user-specific advertising material (11) is determined based on user information extracted from at least one of an IP address of the user, and user information extracted from a computer game user account of the user.

10. A system for presenting user-specific advertising material (11) in a virtual environment (1), comprising:
a presenting module configured to present a virtual environment (1) to a user, wherein the user has a presence in the virtual environment (1) as an avatar (30), wherein the presenting module enables the user to trigger one or more digital triggers; and
an advertising module configured to:
embed an object (10) in said virtual environment (1), the object (10) is communicatively connected to a server, wherein the object (10) is capable of presenting the user-specific advertising material (11) when one or more digital trigger is activated;
determine if there is a digital trigger in the virtual environment (1), wherein the presenting module presents at least one advertising material (11) via the object (10) based on the digital trigger, and identifies a percentage of at least one original ad of the advertising material (11) that is visible as on-screen ads within a field of view of the user when the visible advertising material (11) is presented to the user via the object (10) by performing a pixel sampling operation on the advertising material (11) rendered from the virtual environment (1), wherein said advertising material (11) is visible to or heard by the user when said digital trigger is activated; and
track one or more interactions of the user with at least one of the displayed object (10) and the displayed advertising material (11).

11. The system of claim 10, wherein the digital trigger is activated when the avatar (30) is within an activation zone for said object (10), wherein both the object (10) and the advertising material (11) is displayed only when the digital trigger is activated, further wherein the object (10) and the advertising material (11) is live rendered in run-time, fully native, wherein the digital trigger comprises system generated triggers and triggers based on user inputs.

12. The system of claim 11 further comprising a user engagement module configured to quantify user engagement of the advertising material (11) based on the pixel sampling operation.

13. The system of claim 12, wherein the user engagement module quantifies the user engagement based on at least one of:
a duration of time the avatar (30) remains in the activation zone of said object (10);
a position of the avatar (30) with respect to the object (10) during the time the avatar (30) remains in the activation zone of said object (10); and
a duration of time the avatar (30) interacts with the object (10) with respect to the duration of time the avatar (30) remains in the activation zone of said object (10).

14. The system of claim 13 further comprising a payment module configured to charge a fee from an advertiser of the advertising material (11), wherein the fee is proportional to the quantity and a quality of user engagement with the object (10) in the activation zone, wherein the advertising material (11) comprising at least one of an audio, a video, and an image, wherein user engagement comprises one or more interactions via user control input.

15. The system of claim 14, wherein the virtual environment (1) exists with a computer game, further wherein the avatar (30) of the user is a character in the computer game, wherein the computer game is a 3D computer game played with a first-person perspective, wherein the activation zone is created by a collider embedded within the object (10) in the virtual environment (1), wherein the virtual environment (1) comprising at least one of a virtual reality environment, an augmented reality environment, a computer game, and a digital environment, wherein the user-specific advertising material (11) is determined based on user information extracted from at least one of an IP address of the user, and user information extracted from a computer game user account of the user, and further comprising an uploading module configured to enable the user to upload personal content for appearing in the computer game, wherein the presenting module displays the personal content of the user as part of the computer game.

## Patentansprüche

1. Computerimplementiertes Verfahren zur Präsentation von benutzerspezifischem Werbematerial (11) in einer virtuellen Umgebung (1), umfassend:
Präsentieren einer virtuellen Umgebung (1) einem Benutzer durch ein Präsentationsmodul, wobei der Benutzer eine Präsenz in der virtuellen Umgebung (1) als ein Avatar (30) aufweist;
Einbetten eines Objekts (10) in der virtuellen Umgebung (1) durch ein Werbemodul, wobei das Objekt (10) kommunikativ mit einem Server verbunden ist, wobei das Objekt (10) dazu befähigt ist, das benutzerspezifische Werbematerial (11) zu präsentieren, wenn ein oder mehrere digitale Auslöser aktiviert werden;
Bestimmen durch das Werbemodul, ob ein digitaler Auslöser vorliegt, der in der virtuellen Umgebung (1) aktiviert wurde;
Präsentieren mindestens eines Werbematerials (11) mittels des Objekts (10) durch das Präsentationsmodul auf der Basis des digitalen Auslösers, wobei das Werbematerial (11) für den Benutzer sichtbar ist oder von diesem gehört wird, wenn der digitale Auslöser aktiviert wird;
Identifizieren eines Prozentanteils mindestens einer ursprünglichen Werbung des Werbematerials (11), das als Bildschirmwerbungen innerhalb eines Sichtfelds des Benutzers sichtbar ist, durch das Präsentationsmodul, wenn das sichtbare Werbematerial (11) dem Benutzer mittels des Objekts (10) präsentiert wird, wobei das Identifizieren des Prozentanteils eine Pixelabtastungsoperation an dem Werbematerial (11), das aus der virtuellen Information (1) gerendert wird, umfasst; und
Verfolgen und Aufzeichnen einer oder mehrerer Interaktionen des Benutzers mit mindestens einem von dem angezeigten Objekt (10) und dem angezeigten Werbematerial (11) durch das Werbemodul.

2. Verfahren nach Anspruch 1, ferner umfassend ein Ermöglichen durch das Präsentationsmodul, dass der Benutzer einen oder mehrere digitale Auslöser auslöst, wobei der eine oder die mehreren digitalen Auslöser aktiviert werden, wenn sich der Avatar (30) innerhalb einer Aktivierungszone für das Objekt (10) befindet, wobei sowohl das Objekt (10) als auch das Werbematerial (11) präsentiert werden, wenn der digitale Auslöser aktiviert wird, ferner wobei das Objekt (10) und das Werbematerial (11) in der Laufzeit vollständig nativ live gerendert werden, wobei der digitale Auslöser systemerzeugte Auslöser und Auslöser auf der Basis von Benutzereingaben umfasst.

3. Verfahren nach Anspruch 2, ferner umfassend ein Quantifizieren eines Benutzer-Engagements mit dem Werbematerial (11) auf der Basis der Pixelabtastungsoperation durch ein Benutzer-Engagement-Modul.

4. Verfahren nach Anspruch 3, wobei die Quantifizierung des Benutzer-Engagements auf der Basis von mindestens einem der folgenden basiert:
einer Zeitdauer, die der Avatar (30) in der Aktivierungszone des Objekts (10) bleibt, wobei das Objekt (10) mindestens eines von einem Bild, einem Audio und einem Video umfasst;
einer Position des Avatars (30) in Bezug auf das Objekt (10) während der Zeit, die der Avatar in der Aktivierungszone des Objekts (10) bleibt; und
einer Zeitdauer, die der Avatar (30) mit dem Objekt (10) interagiert, in Bezug auf die Zeitdauer, die der Avatar (30) in der Aktivierungszone des Objekts (10) bleibt.

5. Verfahren nach einem der Ansprüche 4, ferner umfassend ein Verlangen einer Gebühr von einem Werbenden des Werbematerials (11) durch ein Zahlungsmodul, wobei die Gebühr proportional zu der Menge und einer Qualität eines Benutzer-Engagements mit dem Objekt (10) in der Aktivierungszone ist, wobei das Werbematerial (11) mindestens eines von einem Audio, einem Video und einem Bild umfasst.

6. Verfahren nach Anspruch 5, wobei die virtuelle Umgebung (1) mit einem Computerspiel existiert, ferner wobei der Avatar (30) des Benutzers eine Figur in dem Computerspiel ist, wobei das Computerspiel ein 3D-Computerspiel ist, das mit einer First-Person-Perspektive gespielt wird.

7. Verfahren nach Anspruch 6, wobei die Aktivierungszone durch einen Kollider erzeugt wird, der mit dem Objekt (10) in der virtuellen Umgebung (1) eingebettet ist, wobei die virtuelle Umgebung (1) mindestens eine bzw. eines von einer Virtual-Reality-Umgebung, einer Augmented-Reality-Umgebung, einem Computerspiel und einer digitalen Umgebung umfasst.

8. Verfahren nach Anspruch 7, ferner umfassend ein Ermöglichen durch ein Hochlademodul, dass der Benutzer persönlichen Inhalt zum Erscheinen in dem Computerspiel hochlädt, wobei das Präsentationsmodul den persönlichen Inhalt dem Benutzer als Teil des Computerspiels anzeigt.

9. Verfahren nach Anspruch 8, wobei das benutzerspezifische Werbematerial (11) auf der Basis von Benutzerinformationen, die von mindestens einer von einer IP-Adresse des Benutzers extrahiert werden, und Benutzerinformationen, die von einem Computerspielbenutzerkonto des Benutzers extrahiert werden, bestimmt wird.

10. System zur Präsentation von benutzerspezifischem Werbematerial (11) in einer virtuellen Umgebung (1), umfassend:
ein Präsentationsmodul, das dazu konfiguriert ist, eine virtuelle Umgebung (1) einem Benutzer zu präsentieren, wobei der Benutzer eine Präsenz in der virtuellen Umgebung (1) als ein Avatar (30) aufweist, wobei das Präsentationsmodul ermöglicht, dass der Benutzer ein oder mehrere digitale Auslöser auslöst; und
ein Werbemodul, das konfiguriert ist zum:
Einbetten eines Objekts (10) in der virtuellen Umgebung (1) durch ein Werbemodul, wobei das Objekt (10) kommunikativ mit einem Server verbunden ist, wobei das Objekt (10) dazu befähigt ist, das benutzerspezifische Werbematerial (11) zu präsentieren, wenn ein oder mehrere digitale Auslöser aktiviert werden;
Bestimmen, ob ein digitaler Auslöser in der virtuellen Umgebung (1) vorliegt, wobei das Präsentationsmodul mindestens eines Werbematerial (11) mittels des Objekts (10) auf der Basis des digitalen Auslösers präsentiert und einen Prozentanteil mindestens einer ursprünglichen Werbung des Werbematerials (11), das als Bildschirmwerbungen innerhalb eines Sichtfelds des Benutzers sichtbar ist, wenn das sichtbare Werbematerial (11) dem Benutzer mittels des Objekts (10) präsentiert wird, durch Durchführen einer Pixelabtastungsoperation an dem Werbematerial (11), das aus der virtuellen Information (1) gerendert wird, identifiziert, wobei das Werbematerial (11) für den Benutzer sichtbar ist oder von diesem gehört wird, wenn der digitale Auslöser aktiviert wird; und
Verfolgen einer oder mehrerer Interaktionen des Benutzers mit mindestens einem von dem angezeigten Objekt (10) und dem angezeigten Werbematerial (11).

11. System nach Anspruch 10, wobei der digitale Auslöser aktiviert wird, wenn sich der Avatar (30) innerhalb einer Aktivierungszone für das Objekt (10) befindet, wobei sowohl das Objekt (10) als auch das Werbematerial (11) nur angezeigt werden, wenn der digitale Auslöser aktiviert wird, ferner wobei das Objekt (10) und das Werbematerial (11) in der Laufzeit vollständig nativ live gerendert werden, wobei der digitale Auslöser systemerzeugte Auslöser und Auslöser auf der Basis von Benutzereingaben umfasst.

12. System nach Anspruch 11, ferner umfassend ein Benutzer-Engagement-Modul, das dazu konfiguriert ist, ein Benutzer-Engagement mit dem Werbematerial (11) auf der Basis der Pixelabtastungsoperation zu quantifizieren.

13. System nach Anspruch 12, wobei das Benutzer-Engagement-Modul das Benutzer-Engagement auf der Basis von mindestens einem der folgenden quantifiziert:
einer Zeitdauer, die der Avatar (30) in der Aktivierungszone des Objekts (10) bleibt;
einer Position des Avatars (30) in Bezug auf das Objekt (10) während der Zeit, die der Avatar (30) in der Aktivierungszone des Objekts (10) bleibt; und
einer Zeitdauer, die der Avatar (30) mit dem Objekt (10) interagiert, in Bezug auf die Zeitdauer, die der Avatar (30) in der Aktivierungszone des Objekts (10) bleibt.

14. System nach Anspruch 13, ferner umfassend ein Zahlungsmodul, das dazu konfiguriert ist, eine Gebühr von einem Werbenden des Werbematerials (11) zu verlangen, wobei die Gebühr proportional zu der Menge und einer Qualität eines Benutzer-Engagements mit dem Objekt (10) in der Aktivierungszone ist, wobei das Werbematerial (11) mindestens eines von einem Audio, einem Video und einem Bild umfasst, wobei das Benutzer-Engagement eine oder mehrere Interaktionen mittels einer Benutzersteuerungseingabe umfasst.

15. System nach Anspruch 14, wobei die virtuelle Umgebung (1) mit einem Computerspiel existiert, ferner wobei der Avatar (30) des Benutzers eine Figur in dem Computerspiel ist, wobei das Computerspiel ein 3D-Computerspiel ist, das mit einer First-Person-Perspektive gespielt wird, wobei die Aktivierungszone durch einen Kollider erzeugt wird, der innerhalb des Objekts (10) in der virtuellen Umgebung (1) eingebettet ist, wobei die virtuelle Umgebung (1) mindestens eine bzw. eines von einer Virtual-Reality-Umgebung, einer Augmented-Reality-Umgebung, einem Computerspiel und einer digitalen Umgebung umfasst, wobei das benutzerspezifische Werbematerial (11) auf der Basis von Benutzerinformationen, die von mindestens einer von einer IP-Adresse des Benutzers extrahiert werden, und Benutzerinformationen, die von einem Computerspielbenutzerkonto des Benutzers extrahiert werden, bestimmt wird, und ferner umfassend ein Hochlademodul, das dazu konfiguriert ist, zu ermöglichen, dass der Benutzer persönlichen Inhalt zum Erscheinen in dem Computerspiel hochlädt, wobei das Präsentationsmodul den persönlichen Inhalt dem Benutzer als Teil des Computerspiels anzeigt.

## Revendications

1. Un procédé mis en œuvre par ordinateur pour présenter du matériel publicitaire spécifique à l'utilisateur (11) dans un environnement virtuel (1) comprenant :
présenter, par un module de présentation, un environnement virtuel (1) à un utilisateur, l'utilisateur ayant une présence dans l'environnement virtuel (1) en tant qu'avatar (30) ;
intégrer, par un module publicitaire, un objet (10) dans ledit environnement virtuel (1), l'objet (10) est connecté de manière communicative à un serveur, l'objet (10) étant capable de présenter le matériel publicitaire spécifique à l'utilisateur (11) lorsqu'un ou plusieurs déclencheurs numériques sont activés ;
déterminer, par le module publicitaire, s'il existe un déclencheur numérique activé dans l'environnement virtuel (1) ;
présenter, par le module de présentation, au moins un matériel publicitaire (11) via l'objet (10) sur la base du déclencheur numérique, ledit matériel publicitaire (11) étant visible ou entendu par l'utilisateur lorsque ledit déclencheur numérique est activé ;
identifier, par le module de présentation, un pourcentage d'au moins une publicité originale du matériel publicitaire (11) qui est visible sous forme de publicités à l'écran dans un champ de vision de l'utilisateur lorsque le matériel publicitaire visible (11) est présenté à l'utilisateur via l'objet (10), dans lequel l'identification du pourcentage comprend l'exécution d'une opération d'échantillonnage de pixels sur le matériel publicitaire (11) rendu à partir de l'environnement virtuel (1) ; et
faire le suivi et enregistrer, à l'aide du module publicitaire, une ou plusieurs interactions de l'utilisateur avec au moins l'un de l'objet affiché (10) et du matériel publicitaire affiché (11).

2. Le procédé selon la revendication 1, comprenant en outre l'activation, par le module de présentation, de l'utilisateur pour déclencher un ou plusieurs déclencheurs numériques, le ou les déclencheurs numériques étant activés lorsque l'avatar (30) se trouve dans une zone d'activation pour l'objet (10), l'objet (10) et le matériel publicitaire (11) étant tous deux présentés lorsque le déclencheur numérique est activé, l'objet (10) et le matériel publicitaire (11) étant en outre rendus en direct au moment de l'exécution, de manière entièrement native, le déclencheur numérique comprenant des déclencheurs générés par le système et des déclencheurs basés sur des entrées utilisateur.

3. Le procédé selon la revendication 2 comprenant en outre la quantification, par un module d'engagement d'utilisateur, de l'engagement de l'utilisateur du matériel publicitaire (11) sur la base de l'opération d'échantillonnage de pixels.

4. Le procédé selon la revendication 3, dans lequel la quantification de l'engagement de l'utilisateur est basée sur au moins l'un des éléments suivants :
une durée pendant laquelle l'avatar (30) demeure dans la zone d'activation dudit objet (10), ledit objet (10) comprenant au moins l'un parmi une image, un contenu audio et une vidéo;
une position de l'avatar (30) par rapport à l'objet (10) pendant le temps où l'avatar reste dans la zone d'activation dudit objet (10) ; et
une durée pendant laquelle l'avatar (30) interagit avec l'objet (10) par rapport à la durée pendant laquelle l'avatar (30) demeure dans la zone d'activation dudit objet (10).

5. Le procédé selon l'une quelconque des revendications 4, comprenant en outre le prélèvement, par un module de paiement, d'un tarif auprès d'un annonceur du contenu publicitaire (11), ledit tarif étant proportionnel à la quantité et à la qualité de l'interaction de l'utilisateur avec l'objet (10) dans la zone d'activation, ledit contenu publicitaire (11) comprenant au moins l'un parmi un contenu audio, une vidéo et une image.

6. Le procédé selon la revendication 5, dans lequel l'environnement virtuel (1) existe avec un jeu informatique, en outre dans lequel l'avatar (30) de l'utilisateur est un personnage du jeu informatique, dans lequel le jeu informatique est un jeu informatique 3D joué avec une perspective à la première personne.

7. Le procédé selon la revendication 6, dans lequel la zone d'activation est créée par un collisionneur intégré à l'objet (10) dans l'environnement virtuel (1), l'environnement virtuel (1) comprenant au moins un environnement de réalité virtuelle, un environnement de réalité augmentée, un jeu informatique et un environnement numérique.

8. Le procédé selon la revendication 7, comprenant en outre l'activation, par un module de téléversement, la possibilité pour l'utilisateur de téléverser un contenu personnel destiné à apparaître dans le jeu vidéo, un module de présentation affichant le contenu personnel de l'utilisateur en tant qu'élément du jeu vidéo.

9. Le procédé selon la revendication 8, dans lequel le contenu publicitaire spécifique à l'utilisateur (11) est déterminé sur la base d'informations utilisateur extraites d'au moins l'une parmi une adresse IP de l'utilisateur et des informations utilisateur extraites d'un compte utilisateur de jeu vidéo de l'utilisateur.

10. Un système de présentation de matériel publicitaire spécifique à l'utilisateur (11) dans un environnement virtuel (1) comprenant :
un module de présentation configuré pour présenter un environnement virtuel (1) à un utilisateur, l'utilisateur ayant une présence dans l'environnement virtuel (1) en tant qu'avatar (30), le module de présentation permettant à l'utilisateur de déclencher un ou plusieurs déclencheurs numériques ; et un module publicitaire configuré pour :
Intégrer un objet (10) dans ledit environnement virtuel (1), l'objet (10) étant connecté à un serveur, ledit objet (10) étant capable de présenter un contenu publicitaire (11) spécifique à l'utilisateur lorsqu'un ou plusieurs déclencheurs numériques sont activés ;
déterminer la présence d'un déclencheur numérique dans l'environnement virtuel (1), le module de présentation présentant au moins un contenu publicitaire (11) via l'objet (10) en fonction du déclencheur numérique, et identifier un pourcentage d'au moins une publicité originale du contenu publicitaire (11) visible à l'écran dans le champ de vision de l'utilisateur lorsque le contenu publicitaire visible (11) lui est présenté via l'objet (10) en effectuant une opération d'échantillonnage de pixels sur le contenu publicitaire (11) rendu depuis l'environnement virtuel (1), ledit contenu publicitaire (11) étant visible ou audible par l'utilisateur lorsque ledit déclencheur numérique est activé ; et
faire le suivi d'une ou plusieurs interactions de l'utilisateur avec au moins, l'un de l'objet affiché (10) et du matériel publicitaire affiché (11).

11. Le système selon la revendication 10, dans lequel le déclencheur numérique est active lorsque l'avatar (30) se trouve dans une zone d'activation dudit objet (10), dans laquelle l'objet (10) ainsi que le contenu publicitaire (11) sont affichés uniquement lorsque le déclencheur numérique est activé, et dans laquelle, en outre, l'objet (10) et le contenu publicitaire (11) sont rendus en direct, en temps réel, de manière entièrement native, ledit déclencheur numérique comprenant des déclencheurs générés par le système et des déclencheurs basés sur des entrées utilisateur.

12. Le système selon la revendication 11 comprend en outre un module d'engagement utilisateur configuré pour quantifier l'engagement de l'utilisateur du matériel publicitaire (11) sur la base de l'opération d'échantillonnage de pixels.

13. Le système selon la revendication 12, dans lequel le module d'engagement utilisateur quantifie l'engagement de l'utilisateur sur la base d'au moins l'un des éléments suivants :
une durée pendant laquelle l'avatar (30) demeure dans la zone d'activation dudit objet (10) ;
une position de l'avatar (30) par rapport à l'objet (10) pendant le temps où l'avatar (30) demeure dans la zone d'activation dudit objet (10) ; et
une durée pendant laquelle l'avatar (30) interagit avec l'objet (10) par rapport à la durée pendant laquelle l'avatar (30) demeure dans la zone d'activation dudit objet (10).

14. Le système selon la revendication 13, comprenant en outre un module de paiement configuré pour prélever un tarif auprès d'un annonceur du contenu publicitaire (11), ledit tarif étant proportionnel à la quantité et à la qualité de l'engagement de l'utilisateur avec l'objet (10) dans la zone d'activation, ledit contenu publicitaire (11) comprenant au moins l'un parmi un contenu audio, une vidéo et une image, l'engagement de l'utilisateur comprenant une ou plusieurs interactions via des commandes d'entrée utilisateur.

15. Système selon la revendication 14, dans lequel l'environnement virtuel (1) existe au sein d'un jeu informatique, en outre dans lequel l'avatar (30) de l'utilisateur est un personnage du jeu informatique, dans lequel le jeu informatique est un jeu informatique 3D joué avec une perspective à la première personne, dans lequel la zone d'activation est créée par un collisionneur intégré dans l'objet (10) dans l'environnement virtuel (1), dans lequel l'environnement virtuel (1) comprenant au moins un environnement de réalité virtuelle, un environnement de réalité augmentée, un jeu informatique et un environnement numérique, dans lequel le matériel publicitaire spécifique à l'utilisateur (11) est déterminé sur la base d'informations utilisateur extraites d'au moins une adresse IP de l'utilisateur et d'informations utilisateur extraites d'un compte utilisateur de jeu informatique de l'utilisateur, et comprenant en outre un module de téléchargement configuré pour permettre à l'utilisateur de télécharger du contenu personnel pour apparaître dans le jeu informatique, dans lequel le module de présentation affiche le contenu personnel de l'utilisateur dans le cadre du jeu informatique.
